# EUROPÄISCHE PATENTSCHRIFT

(11) **EP 0 403 764 B1**
(45) Veröffentlichungstag und Bekanntmachung des Hinweises auf die Patenterteilung: **24.11.1993**
(21) Anmeldenummer: 90107911.1
(22) Anmeldetag: 26.04.1990
(51) Int. Cl.: G09F 13/18, G09F 13/20

(54) **Beleuchtete Anzeigeeinheit, insbesondere Hausnummer, Verkehrsschild, Werbeträger**
Illuminated display device, particularly house number, traffic sign or advertising sign
Dispositif d'affichage illuminé, en particulier numéro de maison, enseigne pour trafic, support de publicité

(30) Priorität: 19.06.1989 DE 3919925
(43) Veröffentlichungstag der Anmeldung: 27.12.1990
(73) Patentinhaber: INOTEC GMBH GESELLSCHAFT FÜR INNOVATIVE TECHNIK, D-73732 Esslingen (DE)
(72) Erfinder: Schöniger, Karl-Heinz, D-7300 Esslingen (DE); Scheid, Winfried, D-7333 Ebersbach (DE)
(74) Vertreter: Vetter, Hans, Dipl.-Phys. Dr.

(56) Entgegenhaltungen:
- DE-A- 2 852 960
- DE-A- 3 825 436
- GB-A- 2 113 883

## Beschreibung

Die Erfindung betrifft eine beleuchtete Anzeigeeinheit gemäß dem Oberbegriff des Anspruchs.

Bei einer derartigen, aus der DE-OS 3825436 bekannten Anzeigeeinheit werden Leuchtdioden als Leuchtelemente in randseitige Bohrungen entsprechenden Durchmessers der Lichtleitplatte eingesetzt. Das so in die Lichtleitplatte eingebrachte Licht der Leuchtelemente kann diese Lichtleitplatte im wesentlichen nur an Kontaktstellen oder Schnittkanten verlassen, da im übrigen im wesentlichen Totalreflexion an den Seitenflächen auftritt. Aus diesem Grunde sind alle seitlichen Begrenzungskanten mit einer reflektierenden Schicht versehen, die das Licht dort in die Platte zurückreflektieren. Das Licht kann somit lediglich an der Stelle austreten, an der die Anzeigesymbole angebracht sind. Auf diese Weise läßt sich eine hohe Lichtausbeute erreichen, so daß auch größere Platten mit einer geringen Energiezufuhr oder mit Solarenergie betrieben werden können.

Der Nachteil der bekannten Anordnung besteht darin, daß die Leuchtdioden im allgemeinen einen Durchmesser von 5 mm aufweisen, wobei auch Leuchtdioden mit Durchmessern von 8 und 10 mm zur Verfügung stehen. Insbesondere bei sehr großen Lichtleitplatten besteht der Wunsch, lichtstärkere Leuchtdioden mit größerem Durchmesser einzusetzen. Bei der bekannten Anordnung muß daher die Dicke der Lichtleitplatte entsprechend groß gewählt werden, so daß Lichtleitplatten mit einer Plattenstärke von 8 bis 14 mm erforderlich sind, in die die entsprechend großen Bohrungen für große Leuchtdioden einzubringen sind. Da jedoch gerade große Lichtleitplatten Leuchtdioden mit großen Durchmessern erforderlich machen, werden diese Lichtleitplatten sehr schwer und teuer. Hinzu kommt, daß serienmäßige fluoreszierende Lichtleitplatten im allgemeinen nur mit einer Materialstärke von 3 mm erhältlich sind, so daß teure Spezialanfertigungen bei Vorgabe von Mindestabnahmemengen erforderlich sind.

Eine Aufgabe der vorliegenden Erfindung besteht daher darin, eine beleuchtete Anzeigeeinheit der eingangs genannten Gattung zu schaffen, bei der zur Kosten- und Gewichtsreduzierung auch sehr dünne Lichtleitplatten verwendet werden können, wobei das Licht von Leuchtelementen auch mit wesentlich größerem Durchmesser verlustarm in diese Lichtleitplatten eingebracht werden kann.

Diese Aufgabe wird erfindungsgemäß dadurch durch den Kennzeichnenden Teil des Anspruchs 1 gelöst.

Die Vorteile einer solchen Anordnung bestehen insbesondere darin, daß ein variabler Einsatz von Dioden möglich ist, deren Durchmesser sich nicht mehr an der Dicke der Lichtleitplatte orientieren muß. Hierdurch können prinzipiell beliebig dünne Lichtleitplatten oder sogar Folien eingesetzt werden, wobei lediglich die Lichtleitleiste eine größere Dicke als der Durchmesser der Leuchtelemente bzw. Leuchtdioden aufweisen muß, die vorzugsweise als Leuchtelemente eingesetzt werden. Auch sehr große Platten, beispielweise für Werbeträger, können dadurch kostengünstig bei geringem Gewicht und unter Verwendung handelsüblicher Plattenstärken hergestellt werden. Durch den optisch gut leitenden Übergang zwischen der Lichtleitleiste und der Lichtleitplatte kann das Licht des Leuchtelements bzw. der Leuchtelemente nahezu so vollständig in die Lichtleitplatte eingebracht werden, wie wenn dieses Leuchtelement oder diese Leuchtelemente direkt in der Lichtleitplatte eingesetzt wären. Die reflektierende Schicht an den Außenflächen der Lichtleitleiste verhindert dabei ein dort unerwünschter Austritt von Licht und eine Verbesserung des Wirkungsgrads.

Durch die in den Unteransprüchen aufgeführten Maßnahmen sind vorteilhafte Weiterbildungen und Verbesserungen der im Anspruch 1 angegebenen Anzeigeeinheit möglich.

Im einfachsten Falle weist die Lichtleitleiste wenigstens eine Nut zur Aufnahme eines Randbereichs der Lichtleitplatte auf, wobei dann diese Lichtleitleiste auf einfache Weise durch einen Extrudiervorgang als Meterware hergestellt werden kann. Die Lichtleitleiste kann jedoch auch im wesentlichen aus zwei streifenförmigen, jeweils seitlich an einem Randbereich der Lichtleitleiste angebrachten Leistenelementen bestehen, die mit der Lichtleitplatte abschließen oder über deren Randbereich überstehen können. Die Bohrungen zur Aufnahme der Leuchtdioden können sich dann bis in die Lichtleitplatte hinein erstrecken.

Um einen optisch gut leitenden Übergang zwischen der Lichtleitleiste und der Lichtleitplatte zu erzielen, sind diese miteinander verklebt oder verschweißt, insbesondere hochfrequenz-verschweißt (HF-verschweißt). Im Falle eines Verklebens wird ein optisch gut leitender Klebstoff verwendet.

Die Lichtleitplatte kann jedoch auch in der Nut der Lichtleitleiste verklemmt sein, wobei dann die aneinander liegenden Flächen der Klemmverbindung mit einer gut lichtleitenden Paste oder Flüssigkeit versehen werden.

In allen diesen Fällen, Verkleben, Verschweißen, Verklemmen mit lichtleitender Paste oder Flüssigkeit,wird ein Lichtübergang erreicht, der dem einer einstückigen Ausführung von Lichtleitleiste und Lichtleitplatte sehr nahe kommt. Es ist jedoch selbstverständlich auch möglich, diese Teile einstückig auszubilden.

Um eine Anzeigeeinheit zu erreichen, deren Anzeigesymbole von beiden Seiten her erkennbar sind, weist die Lichtleitleiste zweckmäßigerweise zwei Nuten zur Aufnahme der Randbereiche zweier Lichtleitplatten auf, wobei vorzugsweise zwischen diesen Nuten eine weitere Nut zur Aufnahme des Randbereichs einer Kontrastplatte vorgesehen ist. Die dann zwischen diesen Lichtleitplatten angeordnete undurchsichtige Kontrastplatte dient dann für beide Lichtleitplatten. Die in diese Lichtleitleiste eingesetzten Leuchtelemente können dabei in vorteilhafter Weise beide Platten beleuchten, auf deren Rückseite gleiche oder verschiedene Anzeigesymbole aufgebracht sein können.

Zur Fixierung zweier parallel zueinander angeordneter Lichtleitplatten, die wenigstens in einem Bereich mit einer Lichtleitleiste oder zwei nebeneinander liegenden Lichtleitleisten versehen sind, zusammen mit zwei äußeren Abdeckplatten aus durchsichtigem Material zum Schutz der Lichtleitplatten erweist sich ein diese Lichtleitplatten wenigstens teilweise umgreifender Halterahmen als günstig, da zusätzlich auch noch parallel und beabstandet diese Abdeckplatten hält. Auf diese Weise kann ein einziger Rahmen die gesamte Anordnung in der gewünschten Zuordnung fixieren.

Um diese Anordnung auch außerhalb der Lichtleitleisten in wenigstens einem Bereich zu fixieren, ist dort ein Halterahmen vorgesehen, der Nuten zur Aufnahme der Randbereiche der Lichtleitplatte, einer zwischen diesen angeordneten Kontrastplatte sowie der Randbereiche zweier Abdeckplatten an den beiden Außenseiten aufweist.

Zur einfachen und kostengünstigen Herstellung bestehen die Halterahmen zweckmäßigerweise aus Kunststoff, wobei eine außen durchlaufende Vertiefung zur Aufnahme eines metallischen Verstärkungsstreifens vorgesehen ist.

Die als Leuchtdioden ausgebildeten Leuchtelemente weisen insbesondere für Werbezwecke verschiedene Farben auf, so daß durch Ein- oder Ausschalten bzw. Variation der Helligkeiten eine sehr große Vielzahl verschiedener Farben durch Mischeffekte erzeugbar sind. Es ist auch möglich, verschiedenen Lichtleitleisten verschiedene Bereiche der Lichtleitplatte zuzuordnen, wobei diese Lichtleitleisten jeweils mehrere Leuchtelemente verschiedener Farbe aufweisen. Damit können diese verschiedenen Bereiche der Lichtleitplatte in wechselnden Variationen mit unterschiedlichen Farben beleuchtet werden, wobei auch Lichtspiele oder dergleichen denkbar sind.

Um Lichtverluste zu minimieren, sind alle Randbereiche der Lichtleitplatte außerhalb der mit Lichtleitleisten versehenen Bereiche mit einer reflektierenden Schicht versehen, die entweder eine Folie oder eine bedampfte Schicht sein kann.

Ausführungsbeispiele der Erfindung sind in der Zeichnung dargestellt und in der nachfolgenden Beschreibung näher erläutert. Es zeigen:
- Fig. 1: ein erstes Ausführungsbeispiel mit einer in eine Lichtleitleiste eingesetzten Lichtleitplatte im Querschnitt,
- Fig. 2: eine entsprechende Ausführung mit zwei in eine Lichtleitleiste eingesetzten Lichtleitplatten als zweites Ausführungsbeispiel,
- Fig. 3: als drittes Ausführungsbeispiel eine Lichtleitleiste, die aus zwei streifenförmigen Leistenelementen besteht,
- Fig. 4: als viertes Ausführungsbeispiel ein Aufbau gemäß Fig. 3, bei dem eine Leuchtdiode bis in die Lichtleitplatte hineinreicht,
- Fig. 5: eine Anordnung zweier Lichtleitplatten gemäß dem ersten Ausführungsbeispiel in einem Halterahmen im Querschnitt,
- Fig. 6: eine Vorderansicht einer Anzeigeeinheit mit einer Lichtleitleiste an der oberen Kante einer Lichtleitplatte und
- Fig. 7: eine Anordnung von drei separaten Lichtleitleisten an der oberen Kante einer in drei Bereiche unterteilten Lichtleitplatte.

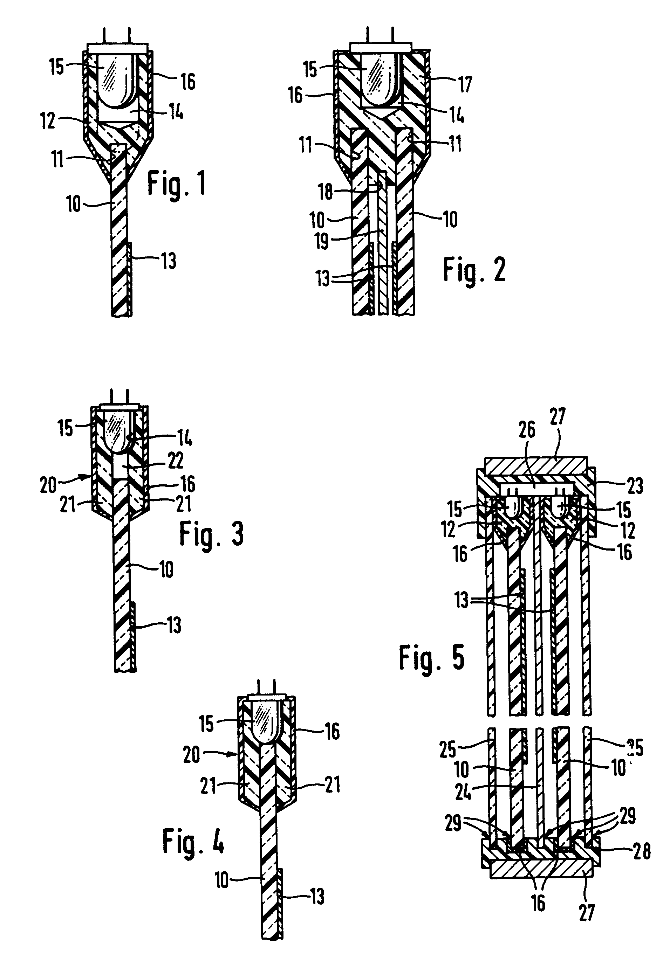

Bei dem in Fig. 1 dargestellten ersten Ausführungsbeispiel ist eine nur teilweise im Querschnitt dargestellte Lichtleitplatte 10 aus durchsichtigem Material in eine Nut 11 einer Lichtleitleiste 12 eingesetzt, die ebenfalls aus durchsichtigem Material besteht. Als durchsichtiges Material kann im einfachsen Falle ein glasklarer Kunststoff, beispielsweise Acrylglas verwendet werden, wobei sich jedoch fluoreszierende Materialien noch weit besser eignen. Diese bestehen aus glasklarem Kunststoff, der mit Fluoreszenz-Farbstoff eingefärbt bzw. mit fluoreszierenden Partikeln versetzt ist. Derartige Lichtleitplatten haben die Eigenschaft, absorbiertes Licht durch Fluoreszenz wieder abzustrahlen. Die Fluoreszenz-Strahlung wird durch Totalreflexion an die Begrenzungskanten geleitet und dort konzentriert abgestrahlt, sofern nicht entgegenwirkende Maßnahmen vorgesehen werden. Im übrigen erfolgt ein Lichtaustritt an denjenigen Stellen, an denen andere Körper in engem Kontakt mit der Lichtleitplatte treten. Dies wird hier durch Anzeigesymbole 13 bewirkt, die an der vom Betrachter aus gesehen hinteren Fläche der Lichtleitplatte 10 angeordnet sind. Bei diesen Anzeigesymbolen 13 kann es sich um aufgeklebte Folien, aufgedampfte Flächen oder dergleichen handeln. An den Kontaktstellen tritt das Licht aus und beleuchtet dadurch die aufgebrachten Anzeigesymbole 13. Prinzipiell ist es auch möglich, Anzeigesymbole 13 einzuformen, insbesondere einzufräsen, wobei dann das Licht an den Frässtellen austritt und diese beleuchtet. Schließlich ist es prinzipiell auch möglich, an der Vorderseite der Lichtleitplatte undurchsichtige Anzeigesymbole aufzubringen, die dann in Kontrast mit dem Licht in der Lichtleitplatte treten.

Prinzipiell kann sowohl die Lichtleitplatte 10, wie auch die Lichtleitleiste 12 aus fluoreszierendem Material bestehen, jedoch reicht es oft aus, die Lichtleitleiste 12 aus gewöhnlichem, durchsichtigem Kunststoff herzustellen. In einer besonders einfachen und billigen Version kann selbstverständlich auch die Lichtleitplatte 10 aus einfachem, durchsichtigem Kunststoff bestehen.

Die Lichtleitleiste 12 weist eine gegenüber der Dicke bzw. Plattenstärke der Lichtleitplatte 10 größere Dicke auf und besitzt einen im wesentlichen rechteckigen Querschnitt, wobei im Bereich der Nut 11 Abschrägungen zur Lichtleitplatte 10 hin vorgesehen sind. Diese können selbstverständlich auch rund sein, eine andere Gestalt aufweisen oder ganz entfallen. Schließlich kann auch die Lichtleitleiste 12 selbst eine andere Querschnittsgestalt, z.B. einen dreieckigen Querschnitt aufweisen.

Die Verbindung der in die Nut 11 eingesetzten Lichtleitplatte 10 erfolgt durch Verkleben mittels eines gut lichtleitenden Klebstoffs oder durch Verschweißen, z.B. durch Hochfrequenz-Verschweißen. Alternativ hierzu ist es möglich, die Lichtleitplatte 10 auch in die Nut 11 einzuklemmen oder einzupressen, wobei dann vorzugsweise die Berührungsflächen mit einer gut lichtleitenden Paste oder Flüssigkeit versehen sind. Diese Maßnahmen haben das Ziel, einen möglichst ungehinderten und homogenen Lichtübergang von der Lichtleitleiste zur Lichtleitplatte 10 zu gewährleisten, um einer einstückigen Ausbildung möglichst nahezukommen, die selbstverständlich ebenfalls möglich ist.

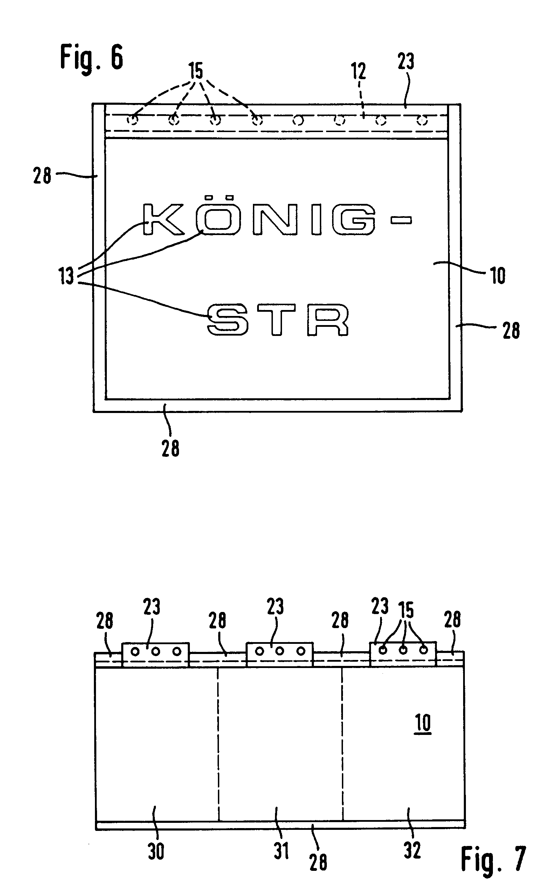

Von der Oberseite der Lichtleitleiste 12 aus erstreckt sich eine Sackbohrung 14 ins Innere der Lichtleitleiste 12 zur Lichtleitplatte 10 hin. Diese Sackbohrung 14 kann vor der Lichtleitplatte 10 enden, kann sich jedoch auch bis in die Lichtleitplatte 10 hineinerstrecken, wie dies durch gestrichelte Linien angedeutet ist. In diese Sackbohrung 14 ist eine Leuchtdiode 15 eingesetzt, deren Außendurchmesser im wesentlichen dem Durchmesser der Sachbohrung 14 entspricht. Diese Leuchtdiode 15 kann - wie dargestellt - vor dem unteren Ende der Sackbohrung 14 enden, kann sich jedoch auch bis zu diesem Ende erstrecken. In der Querschnittsdarstellung gemäß Fig. 1 ist nur eine einzige Leuchtdiode 15 erkennbar, selbstverständlich können jedoch auch mehrere Leuchtdioden in regelmäßigen oder unregelmäßigen Abständen vorgesehen sein, wie dies im Zusammenhang mit den Figuren 6 und 7 noch näher erläutert wird.

Die Außenflächen der Lichtleitleiste 12 sind bis auf den Bereich der Nut 11 mit einer nach innen reflektierenden Schicht 16 versehen. Hierbei kann es sich um eine innenverspiegelte Folie handeln, jedoch kann diese Schicht 16 auch als Spiegelschicht aufgedampft oder auf andere Weise aufgebracht sein. Die Oberseite der Lichtleitleiste 12 ist selbstverständlich ebenfalls mit dieser Schicht 16 versehen, was in der Schnittdarstellung wegen der eingesetzten Leuchtdiode 15 nicht erkennbar ist. Im Einzelfall kann selbstverständlich auf die Verspiegelung einer bestimmten Fläche oder eines Flächenbereichs auch verzichtet werden, jedoch sollte ein möglichst großer Bereich der Lichtleitleiste 12 mit einer solchen Schicht 16 versehen sein, insbesondere die Schnitt- und Schrägflächen, um einen Lichtaustritt zu verhindern. Dadurch gelangt das gesamte Licht der Leuchtdiode 15 in die Lichtleitplatte 10.

Prinzipiell können anstelle von Leuchtdioden 15 auch andere kleine Leuchtelemente verwendet werden.

Durch diese Anordnung können sehr dünne Lichtleitplatten 10 von beispielsweise 3 mm Plattenstärke durch sehr große und lichtstarke Leuchtdioden 15 von 5, 8 oder sogar 10 mm Durchmesser beleuchtet werden, um die Kosten und das Gewicht der Anzeigeeinheit zu reduzieren.

Je nach Größe der Lichtleitplatte 10 kann eine derartige Lichtleitleiste 12 an einer Seitenkante der Lichtleitplatte 10 angeordnet sein, während die übrigen Seitenkanten mit einer entsprechenden reflektierenden Schicht 16 versehen sind. Es ist jedoch auch möglich, an gegenüberliegenden Kanten oder an allen Kanten dieser Lichtleitplatte 10 derartige Lichtleitleisten 12 vorzusehen.

Bei dem in Figur 2 dargestellen zweiten Ausführungsbeispiel sind zwei Lichtleitplatten 10 in paralleler Anordnung in entsprechende Nuten 11 einer breiteren Lichtleitleiste 12 eingesetzt. Zwischen diesen Nuten 11 ist eine weitere Nut 18 zur Aufnahme einer Kontrastplatte 19 vorgesehen, die zwischen den Lichtleitplatten 10 angeordnet ist. Hierdurch ist es möglich, eine Anzeigeeinheit zu schaffen, deren Anzeigesymbole 13 von beiden Seiten her gelesen werden können. Hierzu sind diese Anzeigesymbole 13 jeweils an der der Kontrastplatte 19 zugewandten Seite der Lichtleitplatte 10 angebracht. Selbstverständlich kann es sich hierbei auch um verschiedene Anzeigesymbole 13 handeln. Eine derartige Kontrastplatte 19 kann selbstverständlich auch beim ersten und bei den folgenden Ausführungsbeispielen vorgesehen sein, um einen Kontrast der beleuchteten Anzeigesymbole 13 zum Hintergrund zu erreichen.

Die Lichtleitleiste 17 ist wiederum mit einer reflektierenden Schicht 16 versehen, wobei nunmehr die Leuchtdiode 15 beide Lichtleitplatten 10 beleuchten kann. Diese Lichtleitleiste 17 dient daher nicht nur zum Lichtübergang von der großen Leuchtdiode 15 zu den dünnwandigen Lichtleitplatten 10, sondern auch zu deren Halterung.

Bei dem in den Figuren 3 und 4 dargestellten dritten und vierten Ausführungsbeispiel besteht eine Lichtleitleiste 20 jeweils aus zwei streifenförmigen Leistenelementen 21, die an beiden Seitenflächen der Lichtleitplatte 10 an deren Randbereich befestigt sind, insbesondere verklebt oder verschweißt. Dabei stehen diese Leistenelemente 21 im dritten Ausführungsbeispiel gemäß Figur 3 über die Lichtleitplatte 10 über, während sie beim Ausführungsbeispiel gemäß Figur 4 mit der oberen Kante der Lichtleitplatte 10 abschließen. Auch hier entsteht durch optisch gut leitende Verklebung oder Verschweißung eine optisch homogene Erweiterung der Lichtleitplatte 10. Die Sackbohrung 14 gemäß dem dritten Ausführungsbeispiel verläuft noch im Bereich eines Schlitzes 22, der sich im überstehenden Bereich der Leistenelemente 21 bildet, während sich die Sackbohrung 14 beim vierten Ausführungsbeispiel gemäß Figur 4 in die Leistenelemente 21 und die Lichtleitplatte 10 hineinerstreckt.

Bei der in Figur 5 dargestellten Anordnung werden zwei Lichtleitplatten 10, die mit einer Lichtleitleiste 12 gemäß dem ersten Ausführungsbei spiel versehen sind,von einem im wesentlichen U-förmigen Halterahmen 23 aus Kunststoff gehalten. Eine Kontrastplatte 24 wird zwischen den beiden Lichtleitleisten 12 gehalten, während zwischen den gegenüberliegenden Außenseiten der Lichtleitleisten 12 und den Innenseiten der die Lichtleitleisten 12 übergreifenden Schenkel des Halterahmens 23 Abdeckplatten25 aus durchsichtigem Kunststoffmaterial oder Glas zum Schutz der Lichtleitplatten 10 angeordnet sind. Im Bereich der Leuchtdioden 15 weist der Halterahmen 23 einen Kanal 26 zur Aufnahme der Anschlüsse und Leitungen für die Leuchtdioden 15 auf. Am oberen Verbindungsbereich des U-Halterahmens 23 ist eine Einformung zur Aufnahme eines Metallbandes 27 vorgesehen, das vorzugsweise aus Aluminium besteht. Dieses Metallband 27 dient zur Versteifung des Halterahmens 23. Besteht dieser selbst aus einem steiferen Material oder aus Metall, so kann dieses Metallband selbstverständlich entfallen.

An den gegenüberliegenden Kanten der Lichtleitplatten 10, der Kontrastplatte 24 und der Abdeckplatten 25 ist ein Halterahmen 28 vorgesehen, der fünf Nuten 29 zur Aufnahme der Platten 10, 24, 25 im gewünschten und vorgesehenen Abstand aufweist. Auch dieser Halterahmen 28 weist wiederum zur Verstärkung einen entsprechenden Kanal und ein Metallband 27 auf. Die randseitigen Bereiche der Lichtleitplatten 10 gegenüber den Lichtleitleisten 12 sind mit der reflektierenden Schicht 16 versehen.

Selbstverständlich können auch beispielsweise zwei Halterahmen 23 an gegenüberliegenden Seitenkanten der Lichtleitplatten 10 angeordnet sein, wenn eine Beleuchtung von zwei Seiten erforderlich ist. Prinzipiell sind Halterahmen 28 dort vorgesehen, wo keine Lichtleitleisten 12 angeordnet sind. Im Einzelfalle können auch einzelne Kantenbereiche ohne Halterahmen sein.

Die Halterahmen 23, 28 können selbstverständlich auch für die anderen Ausführungsbeispiele verwendet werden, insbesondere für das Ausführungsbeispiel gemäß Figur 2. In diesem Falle wird die Kontrastplatte 24 durch die Kontrastplatte 19 ersetzt und die beiden Abdeckplatten 25 liegen an den Außenseiten der Lichtleitleiste 17 an.

Bei der in Figur 6 dargestellten Anzeigeeinheit ist an der oberen Kante der Lichtleitplatte 10 ein Halterahmen 23 angeordnet, während die übrigen Seitenkanten mit Halterahmen 28 versehen sind. Die Lichtleitleiste 12 im Halterahmen 23 weist acht in regelmäßigen Abständen angeordnete Leuchtdioden 15 auf. Die Zahl hängt von der Größe der Lichtleitplatte 10, der gewünschten Beleuchtungsstärke und der Lichtleistung der einzelnen Leuchtdioden ab.

Diese Leuchtdioden 15 können auch verschiedene Farben aufweisen, um verschiedenfarbige Beleuchtungen zu erzeugen. Dabei ergeben gleichzeitig leuchtende Leuchtdioden 15 unterschiedlicher Farbe durch Farbmischeffekte in der Lichtleitleiste bzw. der Lichtleitplatte wieder neue Farben, so daß eine große Farbenvielfalt erreichbar ist, was insbesondere für Werbezwecke von besonderer Bedeutung sein kann. Hierbei ist es auch möglich, programmierte Leuchtfolgen durch Variation der Leuchtzeit und Helligkeit der einzelnen Leuchtdioden vorzugeben.

Bei der in Figur 7 dargestellten Anzeigeeinheit sind an der Oberkante einer Lichtleitplatte 10 drei separate Halterahmen 23 vorgesehen, die jeweils Lichtleitleisten und Leuchtdioden 15 enthalten. Diese drei Halterahmen 23 sind drei Bereichen 30, 31, 32 der Lichtleitplatte 10 zugeordnet, die optisch voneinander getrennt sind, was durch gestrichelte vertikale Linien angedeutet ist. Die übrigen Bereiche der Oberkante der Lichtleitplatte 10 und der Unterkante sind mit Halterahmen 28 versehen. Selbstverständlich kann an der Oberkante auch ein durchgehender Halterahmen 28 vorgesehen sein, wobei lediglich die Lichtleitleisten nicht durchgehend darin angeordnet sind. Die Seitenkanten der Lichtleitplatte 10 sind nicht mit Halterahmen versehen. Auf diese Weise können die drei Bereiche 30 bis 32 durch die jeweils drei Leuchtdioden 15 in den Halterahmen 23 unabhängig voneinander beleuchtet werden, d.h. z.B. in drei verschiedenen Farben oder in drei verschiedenen, programmierten Beleuchtungsfolgen.

Ausgestaltungen gemäß dem eingangs angegebenen Stand der Technik sind selbstverständlich ebenfalls möglich. So kann die Anzeigeeinheit wegen der geringen erforderlichen elektrischen Leistung der Leuchtdioden 15 sowohl an ein Leitungsnetz, insbesondere ein Niederspannungsleitungsnetz angeschlossen werden, es ist jedoch auch möglich, Solarzellen an dieser Anzeigeeinheit anzubringen, z.B. an den Halterahmen oder an separaten, insbesondere schräg gestellten Wandungen. Weiterhin kann ein Dämmerungsschalter oder eine sonstige elektrische Steuerung zur Festlegung der Ein- und Ausschaltzeitpunkte vorgesehen sein.

Anstelle von Abdeckplatten zum Schutz der Lichtleitplatten können auch Schutzbeschichtungen auf den Lichtleitplatten treten, so daß dann besonders kompakte Anordnungen erzielbar sind, insbesondere in Verbindung mit dem Ausführungsbeispiel gemäß Fig. 2. Sind alle Randbereiche der Lichtleitplatten dichtend miteinander verbunden, so kann in vorteilhafter Weise zum Schutz gegen Kondenserscheinungen der Zwischenraum zwischen den Lichtleitplatten nach Art einer Verbundscheibe evakuiert oder mit einem Schutzgas gefüllt sein.

## Patentansprüche

1. Beleuchete Anzeigeeinheit, insbesondere Hausnummer, Verkehrsschild, Werbeträger, mit wenigstens einer Lichtleitplatte (10), mit von dieser beleuchteten Anzeigesymbolen (13) und mit einer an wenigstens einem Bereich einer seitlichen Begrenzungskante der Lichtleitplatte (10) angeordneten, eine größere Dicke als die Lichtleitplatte (10) aufweisenden Lichtleitleiste (12, 17, 20), in der wenigstens ein Leuchtelement (15) eingesetzt ist, wobei der Übergang zwischen der Lichtleitleiste (12, 17, 20) und der Lichtleitplatte (10) optisch gut leitend ausgebildet ist und die Außenflächen der Lichtleitleiste (12, 17, 20) wenigstens teilweise mit einer nach innen reflektierenden Schicht (16) versehen sind, dadurch gekennzeichnet, daß die Lichtleitleiste (12;17 20) wenigstens eine Nut (11) zur Aufnahme eines Randbereiches der Lichtleitplatte (10) aufweist, und daß die Leuchtelemente (15) in Bohrungen (14) der Lichtleitleiste (12; 17; 20) mit einem dem Durchmesser der Leuchtelemente (15) im wesentlichen entsprechenden Durchmesser eingesetzt sind.

2. Anzeigeinheit nach Anspruch 1, dadurch gekennzeichnet, daß die Lichtleitleiste (12; 17; 20) mit der Lichtleitplatte (10) verklebt oder verschweißt ist.

3. Anzeigeeinheit nach Anspruch 1, dadurch gekennzeichnet, daß die Lichtleitplatte (10) in der Nut (11) verklemmt ist, wobei die aneinander liegenden Flächen der Klemmverbindung vorzugsweise mit einer gut lichtleitenden Paste oder Flüssigkeit versehn sind.

4. Anzeigeeinheit nach einem der vorhergehenden Ansprüche, dadurch gekennzeichnet, daß die Lichtleitleiste (17) zwei Nuten (11) zur Aufnahme des Randbereichs zweier Lichtleitplatten (10) aufweist, wobei vorzugsweise zwischen diesen Nuten (11) eine weitere Nut (18) zur Aufnahme des Randbereichs einer Kontrastplatte (19) vorgesehen ist.

5. Anzeigeeinheit nach einem der vorhergehenden Ansprüche, dadurch gekennzeichnet, daß zwei parallel zueinander angeordnete Lichtleitplatten (10) wenigstens in einem Bereich einer oder zweier nebeneinander liegender Lichtleitleisten (12) mit einem diese wenigstens teilweise umgreifenden Halterahmen (23) versehen sind, in denen zwei die Lichtleitplatten (10) jeweils nach außen abdeckende, beabstandet und parallel zu diese angeordnete Abdeckplatte (25) aus durchsichtigem Material gehalten werden, wobei vorzugsweise der Halterahmen (23) einen Kabelkanal (26) für die Stromzuführungen der Leuchtelemente (15) aufweist.

6. Anzeigeeinheit nach einem der vorhergehenden Ansprüche, dadurch gekennzeichnet, daß zwei parallel zueinander angeordnete Lichtleitplatten (10) wenigstens in einem Bereich außerhalb der wenigstens einen Lichtleitleiste (12) mit einem Halterahmen (28) versehen sind, der Nuten (29) zur Aufnahme der Randbereiche der Lichtleitplatten (10) und einer zwischen diesen angeordneten Kontrastplatte (24) aufweist, und daß der Halterahmen (28) vorzugsweise zwei weitere Nuten (29) jeweils außerhalb der anderen Nuten (29) zur Aufnahme der Randbereiche zweier Abdeckplatten (25) aufweist.

7. Anzeigeeinheit nach Anspruch 5 oder 6, dadurch gekennzeichnet, daß die Halterahmen (23, 28) aus Kunststoff bestehen und eine außen durchlaufende Vertiefung zur Aufnahme eines metallischen Verstärkungsstreifens (27) aufweisen.

8. Anzeigeeinheit nach einem der vorhergehenden Ansprüche, dadurch gekennzeichnet, daß die Leuchtelemente (15) als Leuchtdioden ausgebildet sind, die insbesondere verschiedene Farben aufweisen.

9. Anzeigeeinheit nach Anspruch 8, dadurch gekennzeichnet, daß verschiedene Lichtleitleisten verschiedenen Bereichen der Lichtleitplatte (10) zugeordnet sind, wobei diese Lichtleitleisten jeweils mehrere Leuchtdioden (15) verschiedener Farbe aufweisen.

10. Anzeigeinheit nach einem der vorhergehenden Ansprüche, dadurch gekennzeichnet, daß alle Randbereiche der Lichtleitplatte (10) außerhalb der mit Lichtleitleisten (12; 17; 20) versehenen Bereiche mit einer reflektierenden Schicht (16) versehen sind.

11. Anzeigeeinheit nach einem der vorhergehenden Ansprüche, dadurch gekennzeichnet, daß die zu beleuchtenden Anzeigesymbole (13) vom Betrachter aus gesehen an der jeweils hinteren Fläche der Lichtleitplatte (10) aufgeklebt oder aufgedampft sind.

12. Anzeigeeinheit nach einem der vorhergehenden Ansprüche, dadurch gekennzeichnet, daß die Lichtleitplatte (10) und/oder die Lichtleitleiste (12; 17; 20) fluoreszierende Partikel enthält.

## Claims

1. Illuminated display unit, in particular house number, road sign, advertising vehicle, with one or more light-conducting plates (10), with display symbols (13) illuminated thereby and with a light-conducting rail (12, 17, 20), in which one or more luminous elements (15) are installed, located in one or more areas of a lateral edge of the light-conducting plate (10) and being thicker than the light-conducting plate (10), the transition between the light-conducting rail (12, 17, 20) and the light-conducting plate (10) being designed for good light conduction and at least part of the external surfaces of the light-conducting rail (12, 17, 20) being coated with a reflective layer (16), characterized in that the light-conducting rail (12; 17; 20) has one or more grooves (11) for the retention of an edge area of the light-conducting plate (10) and that the luminous elements (15) are installed in bores (14) of the light-conducting rail (12; 17; 20), the diameter of said bores (14) substantially corresponding to the diameter of the luminous elements (15).

2. Display unit according to Claim 1, characterized in that the light-conducting rail (12; 17; 20) is bonded or welded to the light-conducting plate (10).

3. Display unit according to Claim 1, characterized in that the light-conducting rail (10) is clamped in the groove (11), the contact surfaces of the clamped joint preferably being coated with a paste or liquid of good light-conducting properties.

4. Display unit according to any of the preceding claims, characterized in that the light-conducting rail (17) has two grooves (11) for the retention of the edge areas of two light-conducting plates (10), a further groove (18) for the retention of the edge area of a contrast plate (19) being preferably provided between the grooves (11).

5. Display unit according to any of the preceding claims, characterized in that two parallel light-conducting plates (10) are, in one or more areas of one or two adjacent light-conducting rails (12), provided with a retaining frame (23) at least partially encompassing said rails and holding two cover plates (25) of a transparent material covering the light-conducting plates (10) on the outside while being arranged at a distance therefrom and parallel thereto, the retaining frame (23) preferably having a cable duct (26) for the power supply for the luminous elements (15).

6. Display unit according to any of the preceding claims, characterized in that two parallel light-conducting plates (10) are, in one or more areas outside the one or more light-conducting rails (12), provided with a retaining frame (28) with grooves (29) for the retention of the edge areas of the light-conducting plates (10) and a contrast plate (24) arranged therebetween, and in that the retaining frame (28) preferably has two further grooves (29) located outside the other grooves (29) for the retention of two cover plates (25).

7. Display unit according to Claim 5 or 6, characterized in that the retaining frames (23, 28) are made of plastic and have a continuous external recess for a metal reinforcing strip (27).

8. Display unit according to any of the preceding claims, characterized in that the luminous elements (15) are designed as light-emitting diodes, in particular of various colours.

9. Display unit according to Claim 8, characterized in that different light-conducting rails are assigned to different areas of the light-conducting plate (10), each light-conducting rail being provided with several light-emitting diodes (15) of various colours.

10. Display unit according to any of the preceding claims, characterized in that all edge areas of the light-conducting plate (10) outside the areas provided with light-conducting rails (12; 17; 20) are coated with a reflective layer.

11. Display unit according to any of the preceding claims, characterized in that the display symbols (13) to be illuminated are, as viewed by the observer, bonded to or vapour-deposited on the rear surface of the light-conducting plate (10).

12. Display unit according to any of the preceding claims, characterized in that the light-conducting plate (10) and/or the light-conducting rail (12; 17; 20) contains fluorescent particles.

## Revendications

1. Dispositif d'affichage illuminé, en particulier numéro de maison, panneau de signalisation, support publicitaire, comportant au moins une plaque conductrice de Lumière (10), des caractères d'affichage (13) illuminés par celle-ci et un liteau conducteur de lumière (12 ; 17 ; 20) disposé dans au moins une zone d'une arête de limitation latérale de la plaque conductrice de lumière (10) et dont l'épaisseur est supérieure à celle de la plaque conductrice de lumière (10), liteau dans lequel au moins un élément lumineux (15) est monté, la transition entre le liteau conducteur de lumière (12 ; 17 ; 20) et la plaque conductrice de lumière (10) étant bien conductrice d'un point de vue optique et les faces externes du liteau conducteur de lumière (12 ; 17 ; 20) étant revêtues, au moins partiellement, d'une couche (16) réfléchissante vers l'intérieur, caractérisé en ce que le liteau conducteur de lumière (12 ; 17 ; 20) présente au moins une rainure (11) destinée à loger une zone de bordure de la plaque conductrice de lumière (10) et en ce que les éléments lumineux (15) sont insérés dans des perçages (14) du liteau conducteur de lumière (12 ; 17 ; 20), dont le diamètre correspond sensiblement au diamètre des éléments lumineux (15).

2. Dispositif d'affichage selon la revendication 1, caractérisé en ce que le liteau conducteur de lumière (12 ; 17 ; 20) est collé ou soudé à la plaque conductrice de lumière (10).

3. Dispositif d'affichage selon la revendication 1, caractérisé en ce que la plaque conductrice de lumière (10) est coincée dans la rainure (11), les surfaces adjacentes de la liaison par coincement étant de préférence revêtues d'une pâte ou d'un liquide conduisant bien la lumière.

4. Dispositif d'affichage selon l'une des revendications précédentes, caractérisé en ce que le liteau conducteur de lumière (17) présente deux rainures (11) destinées à recevoir le bord de deux plaques conductrices de lumière (10), une autre rainure (18) étant de préférence prévue entre ces rainures (11) pour recevoir le bord d'une plaque de mise en contraste (19).

5. Dispositif d'affichage selon l'une des revendications précédentes, caractérisé en ce que deux plaques conductrices de lumière (10), parallèles l'une par rapport à l'autre, sont pourvues, au moins dans une zone d'un ou des deux liteaux conducteurs de lumière (12) adjacents, d'un cadre de maintien (23) entourant au moins partiellement ceux-ci, dans lequel sont maintenues deux plaques de recouvrement (25) en matériau transparent, recouvrant les plaques conductrices de lumière (10) respectivement vers l'extérieur et disposées à distance et parallèlement à celles-ci, le cadre de maintien (23) comportant de préférence une conduite de câbles (26) pour l'alimentation en courant des éléments lumineux (15).

6. Dispositif d'affichage selon l'une des revendications précédentes, caractérisé en ce que deux plaques conductrices de lumière (10), parallèles l'une par rapport à l'autre, sont pourvues, au moins dans une zone située hors du liteau conducteur de lumière, au nombre minimum d'un, d'un cadre de maintien (28), qui présente des rainures (29) destinées à recevoir les bords des plaques conductrices de lumière (10) et qui présente une plaque de mise en contraste (24) disposée entre eux, et en ce que le cadre de maintien (28) présente, de préférence, deux autres rainures (29), disposées respectivement à l'extérieur des autres rainures (29), pour loger les bords des deux plaques de recouvrement (25).

7. Dispositif d'affichage selon la revendication 5 ou 6, caractérisé en ce que les cadres de maintien (23, 28) sont constitués en matière plastique et présentent, à l'extérieur, un évidement continu destiné à loger une barrette de renforcement (27) métallique.

8. Dispositif d'affichage selon l'une des revendications précédentes, caractérisé en ce que les éléments lumineux (15) sont conformés en diodes luminescentes, qui présentent, en particulier, des couleurs différentes.

9. Dispositif d'affichage selon la revendication 8, caractérisé en ce que différents liteaux conducteurs de lumière sont associés à différentes zones de la plaque conductrice de lumière (10), ces liteaux conducteurs de lumière présentant respectivement plusieurs diodes luminescentes (15) de couleurs différentes.

10. Dispositif d'affichage selon l'une des revendications précédentes, caractérisé en ce que tous les bords de la plaque conductrice de lumière (10) sont revêtus, en dehors des zones pourvues des liteaux conducteurs de lumière (12 ; 17 ; 20), d'une couche (16) réfléchissante.

11. Dispositif d'affichage selon l'une des revendications précédentes, caractérisé en ce que les caractères d'affichage (13) devant être illuminés sont, si l'on se place à l'endroit du lecteur, collés ou projetés par vaporisation respectivement sur la face arrière de la plaque conductrice de lumière (10).

12. Dispositif d'affichage selon l'une des revendications précédentes, caractérisé en ce que la plaque conductrice de lumière (10) et/ou le liteau conducteur de lumière (12 ; 17; 20) contiennent des particules fluorescentes.
